# EUROPEAN PATENT APPLICATION

(11) **EP 4 718 327 A1**
(43) Date of publication of application: **01.04.2026**
(21) Application number: 25190189.8
(22) Date of filing: 17.07.2025
(51) Int. Cl.: G06N 3/049, G06N 3/048, G06N 3/08

(54) **ELECTRONIC DEVICE FOR EXECUTING NEURAL NETWORK MODEL INCLUDING NON-LINEAR OPERATION AND OPERATION METHOD THEREOF**

(30) Priority: 27.09.2024 KR 20240131915
(71) Applicant: Samsung Electronics Co., Ltd., Suwon-si, Gyeonggi-do 16677 (KR)
(72) Inventor: Shin, Chang Woo, 16678 Suwon-si, Gyeonggi-do (KR); de Jesus Alcantara, Carlos Cristiano, 16678 Suwon-si, Gyeonggi-do (KR); Ju, Anes, 16678 Suwon-si, Gyeonggi-do (KR); Park, Kitae, 16678 Suwon-si, Gyeonggi-do (KR)
(74) Representative: Grünecker Patent- und Rechtsanwälte PartG mbB

(57) **Abstract**

An electronic device for executing a neural network model including a non-linear operation and an operation method thereof are provided. The operation method of the electronic device includes obtaining data to be inferred and obtaining an inference result of the data output from the neural network model as the data is input to the neural network model including a plurality of nodes, wherein, in an inference process, a first weight applied when a value of a first node among the plurality of nodes is transmitted to a second node may be updated based on a value of a first reference node, which is any one of the plurality of nodes.

## Description

### BACKGROUND

### 1. Field

Methods and apparatuses consistent with disclosure relate to an electronic device for executing a neural network model including a non-linear operation and an operation method thereof.

### 2. Description of the Related Art

An artificial neural network is a computing system designed to mimic the structure of neurons in the brain. An artificial neural network may recognize patterns or make predictions by processing and learning from input data. A neural network may include a plurality of layers, and each of the plurality of layers may transmit information to a next layer through weights and biases.

To solve more complex problems, an artificial neural network needs to increase in size. In other words, the number of layers and the number of neurons (e.g., nodes) in an artificial neural network may increase. Moreover, because the operation of neurons in an artificial neural network is greatly simplified compared to the operation of neurons in living organisms, more neurons and connection structures may be required to solve the same problem compared to a biological neural network. When an artificial neural network is trained, an error signal may have to be transmitted backward through the entire neural network through backpropagation. Therefore, as the size of the artificial neural network increases, more computation may be required for training.

### SUMMARY

The invention is claimed in the independent claims. Preferred embodiments are specified in the dependent claims.

One or more embodiments may address at least the problems and/or disadvantages described above, and other disadvantages not described above. Also, the embodiments are not required to overcome and may not overcome any of the problems and disadvantages described above.

According to an aspect of the disclosure, there is provided an operation method of an electronic device, the operation method including: inputting, into a neural network model, data to be inferred, the neural network model including a plurality of nodes; and performing an inference process by: updating a first weight corresponding to transmission of a value of a first node, among the plurality of nodes, to a second node, based on a value of a first reference node, among the plurality of nodes; and obtaining an inference result from the neural network model based on the data to be inferred and the updated first weight.

The first reference node may be included in one of one or more layers arranged after a layer including the second node among a plurality of layers included in the neural network model.

The first weight may be updated based on an updated value of the first reference node as the value of the first reference node connected to an edge connecting the first node to the second node is updated.

The first weight may be updated based on a prediction error occurring in one of values of nodes, among the plurality of nodes, connected to the second node via one or more edges.

The neural network model may include a spike neural network model.

In the inference process, a third node may be determined based on a fourth node among the plurality of nodes, a second weight between the fourth node and the third node connected to the fourth node, and a value of a second reference node among the plurality of nodes.

In the inference process, a type of an activation function applied to a third node, among the plurality of nodes, may be determined based on a value of a second reference node, among the plurality of nodes.

In the inference process, a characteristic of an activation function applied to a third node, among the plurality of nodes, may be controlled according to a value of a second reference node.

In the inference process, a value of a third node, among the plurality of nodes, may be determined based on a scale or a bias determined according to a value of a second reference node among the plurality of nodes.

According to another aspect of the disclosure, there is provided an operation method of an electronic device, the operation method including: inputting, into a neural network model, data to be inferred, the neural network model comprising a plurality of nodes; and performing an inference process by: obtaining a value of a first node based on a second node among the plurality of nodes, a weight between the second node and first node connected to the second node, and a value of a reference node, among the plurality of nodes; and obtaining an inference result from the neural network model based on the data to be inferred and the value of the first node.

The reference node may be connected to an edge connecting the first node to the second node and configured to transmit a value of the reference node to the edge.

The reference node may include a node included in a same first layer as the first node, a node included in one or more layers arranged before the first layer, a node included in a second layer including the second node, a node included in one or more layers arranged after the second layer, or the second node.

A value of the reference node may be used for a non-linear operation with the weight.

According to another aspect of the disclosure, there is provided an electronic device including: a memory configured to store instructions; and at least one processor configured to execute the instructions, wherein the instructions, when executed individually or collectively by the at least one processor, cause the electronic device to: input, into a neural network model, data to be inferred, the neural network model comprising a plurality of nodes; and perform an inference process by: updating a first weight corresponding to transmission of a value of a first node among the plurality of nodes to a second node, based on a value of a first reference node, among the plurality of nodes; and obtaining an inference result from the neural network model based on the data to be inferred and the updated first weight.

### BRIEF DESCRIPTION OF DRAWINGS

The above and/or other aspects will be more apparent from descriptions of certain embodiments referring to the accompanying drawings, in which:
FIG. 1 is a diagram schematically illustrating an electronic device according to an embodiment;
FIGS. 2 and 3 are diagrams illustrating a neural network model according to an embodiment;
FIGS. 4 to 7 are diagrams illustrating a neural network model in which a value of another node operates through a non-linear operation, according to an embodiment;
FIG. 8 is a diagram illustrating a method of finding a node in which a prediction error occurs, according to an embodiment;
FIGS. 9 to 13 are diagrams illustrating a location of another node acting as an input, according to an embodiment;
FIG. 14 is a diagram illustrating a spike neural network according to an embodiment; and
FIG. 15 is a flowchart illustrating an operation method of an electronic device, according to an embodiment.

### DETAILED DESCRIPTION

The following detailed structural or functional description is provided as an example only and various alterations and modifications may be made to embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, the embodiments will be described in detail with reference to the accompanying drawings. When describing the embodiments with reference to the accompanying drawings, like reference numerals refer to like elements and a repeated description related thereto will be omitted.

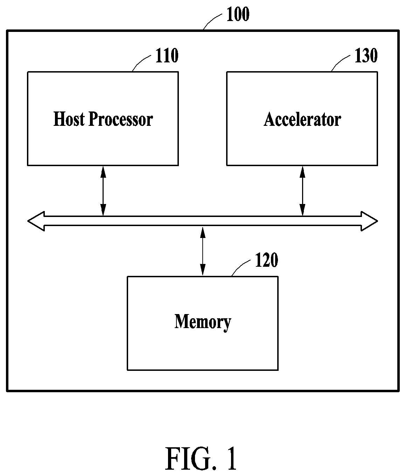

FIG. 1 is a diagram schematically illustrating an electronic device according to an embodiment.

Referring to FIG. 1, an electronic device 100 may include a host processor 110, a memory 120, and an accelerator 130. The host processor 110, the memory 120, and the accelerator 130 may communicate with each other through a bus, a network on a chip (NoC), a peripheral component interconnect express (PCIe), and the like. Only the components related to the example described herein are illustrated as being included in the electronic device 100 of FIG. 1. However, the disclosure is not limited thereto, and as such, according to an embodiment, the electronic device 100 may include one or more other components. For example, the electronic device 100 may further include other general-purpose components in addition to the components illustrated in FIG. 1.

The host processor 110 may perform overall functions for controlling the electronic device 100. The host processor 110 may generally control the electronic device 100 by executing programs and/or instructions stored in the memory 120. The host processor 110 may be implemented as a central processing unit (CPU), a graphics processing unit (GPU), or an application processor (AP), which is included in the electronic device 100, but examples are not limited thereto.

The memory 120 may be hardware for storing data processed or to be processed in the electronic device 100. In addition, the memory 120 may store an application or a driver to be driven by the electronic device 100. The memory 120 may include a volatile memory and/or a non-volatile memory. The volatile memory may include, but is not limited to, a dynamic random access memory (DRAM).

The electronic device 100 may include the accelerator 130. For example, the accelerator 130 may be a separate dedicated processor, which may more efficiently process an operation than the general-purpose host processor 110. For example, due to one or more characteristics of the operation, the accelerator 130 may process the operation in a more efficient manner than the host processor 110. According to an embodiment, the accelerator 130 processing the operation in a more efficient manner may include, but is not limited to, more efficient use of resources, higher processing speed, and/or higher accuracy. In this case, one or more processing elements (PEs) included in the accelerator 130 may be used. According to an embodiment, the accelerator 130 may include, but is not limited to, a neural processing unit (NPU), a tensor processing unit (TPU), a digital signal processor (DSP), a GPU, a neural engine, and the like that perform an operation according to a neural network.

The memory 120 may store a neural network model. According to an embodiment, a processor (may execute the neural network model stored in the memory 120. For example, the host processor 110 and/or the accelerator 130 may execute the neural network model stored in the memory 120. The neural network model may be a model that mimics the way neurons are connected in the human brain and is trained to solve a problem by learning based on training data to recognize or predict a pattern. The problem may be predetermined problem. The neural network model may have different sizes depending on the complexity of a problem. For example, a neural network model that extracts a feature from an image may have a small size compared to a large language model (LLM) that processes a natural language.

An operation of a node in the neural network model is greatly simplified compared to an operation of a neuron in a real human brain. To solve the same problem, the neural network model may require more nodes and/or connectivity structures than a natural neural network. To solve a complex problem, the size of the neural network model may increase, and as the size of the neural network increases, the amount of operations to train the neural network model may also increase.

Hereinafter, the neural network model is described in detail.

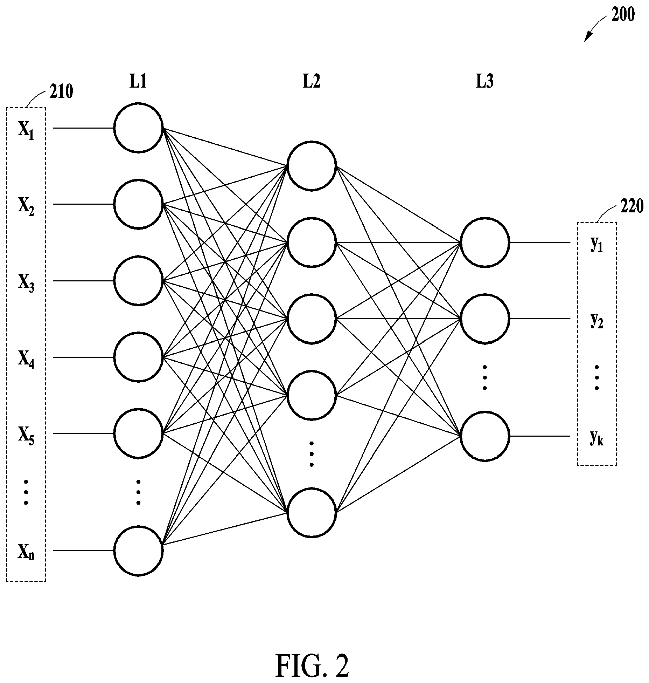

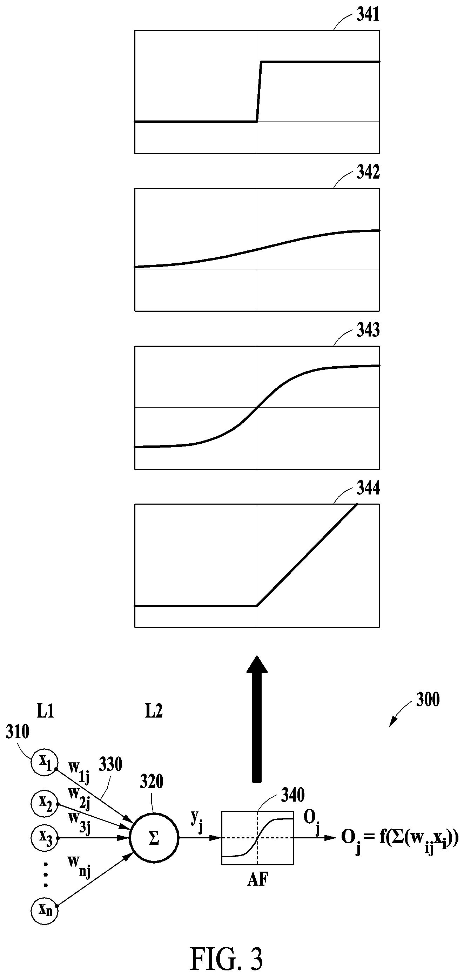

FIGS. 2 and 3 are diagrams illustrating a neural network model according to an embodiment.

Referring to FIG. 2, the structure of a neural network model 200 is provided. The neural network model 200 may include a plurality of layers.

The plurality of layers may include an input layer, a hidden layer, and an output layer. The input layer may be a first layer of the neural network model 200 that receives input data 210. The input data 210 may be data to be inferred using the neural network model 200. The hidden layer may be a layer located between the input layer and the output layer. Nodes located in the hidden layer may process the input data based on weights and biases. The hidden layer may be responsible for learning based on training data and recognizing a pattern. The hidden layer may include many different kinds of layers. For example, the hidden layer may include various layers such as a fully connected layer and a convolution layer. The output layer may be the last layer of the neural network model and a layer that outputs an inference result. The inference result may be output data 220 that is output as the input data 210 is input to the neural network model 200. For example, the output layer may be a layer that outputs the output data 220.

For example, the neural network model 200 may include layers L1, L2, and L3. However, the disclosure is not limited thereto, and as such, the neural network model 200 may include more than three layers. For example, L1 may be a layer that receives the input data 210 and correspond to the input layer. L3 may be the layer that outputs the output data 220 and correspond to the output layer. L2 may correspond to the hidden layer that processes the input data 210. In an example case in which two or more layers exist between L1 and L3, two or more layers may correspond to hidden layers.

Each layer may include a plurality of nodes (e.g., neurons). The value of a node may be transmitted to the next node. The value of the node may be transmitted to the next node through an operation. The transmission of the value of the node is described below with reference to FIG. 3.

FIG. 3 is a diagram illustrating an operation in a node according to an embodiment.

For example, FIG. 3 illustrates a neural network model 300, which is simplified to only show a node 320 of the L2 layer and the nodes of the L1 layer connected to the node 320.

A node may be connected to another node via an edge. For example, the node 320 may be connected to a node 310 via an edge 330. For example, an edge may be a connection between nodes. The value of a node may be transmitted to another node via an edge. For example, the value of the node 310 may be transmitted to the node 320 via the edge 330.

According to an embodiment, a weight may be assigned to an edge. For example, the weight may be a value assigned to the edge and the weight may include a strength of a connection between connected nodes. For example, in FIG. 3, a weight W₁ⱼ assigned to edge 330 may indicate a strength of the connection between the node 310 and the node 320. The strength of a connection may indicate importance. For example, the greater the weight of an edge, the more influence the value of a node connected to that edge has on a result. The weight may be optimized in a training process.

In a neural network model, data may be transmitted in a feed-forward direction. In the neural network model 300, the value of a node may be determined as a weighted sum of nodes connected to the node and the strength (e.g., a weight) of connections between the nodes based on the feed-forward direction. For example, the value of the node 320 may be determined as Y = W•X. W may denote a matrix or a vector representing the strength (e.g., a weight) of the connections between the node 320 and the nodes connected to the node 320. X may denote a matrix or a vector representing values of the nodes connected to the node 320. The neural network model may determine an input sum of a node through a matrix-vector-multiplication (MVM) operation based on multiplication-and-accumulation (MAC). For example, an input sum yⱼ of the node 320 may be determined based on the MVM operation based on MAC. According to an embodiment, a bias may be applied to the input sum. According to an embodiment, the input sum may be the value of a node.

According to an embodiment, the neural network model 300 may further include an activation function 340. The activation function 340 may add non-linearity to the neural network model 300. Due to the addition of non-linearity, the neural network model 300 may learn to solve a more complex problem. In an example case in which the activation function 340 is present, the input sum of the node may be converted to a function value via the activation function 340. In an example case in which the activation function 340 is further included, the function value may be determined as the value of the node. For example, in the neural network model 300, the value of the node 320 may be determined to be *oⱼ* = *f*(Σ(*wᵢⱼxᵢ*)).

The activation function 340 may include a non-linear activation function. For example, the activation function 340 may include a non-linear activation function such as a step function 341, a sigmoid function 342, a hyperbolic tangent function 343, and a rectified linear unit (ReLu) function 344. However, this is an example and embodiments are not limited thereto. It will be apparent to those skilled in the art that the activation function includes various non-linear activation functions in addition to the non-linear activation functions described above.

An operation of each node in the neural network model is greatly simplified compared to an operation of an actual natural biological neuron. To solve the same problem, the neural network model may require more nodes and connectivity structures than a natural neural network. Thus, the size of a neural network model to solve a complex problem may increase. The number of layers and/or nodes of a neural network may be increased to solve a more complex problem. As the size of the neural network model increases, more operations may be required for training of the neural network model. Hereinafter, a neural network model that efficiently trains and makes inferences that reflect the characteristics of a biological neural network is described.

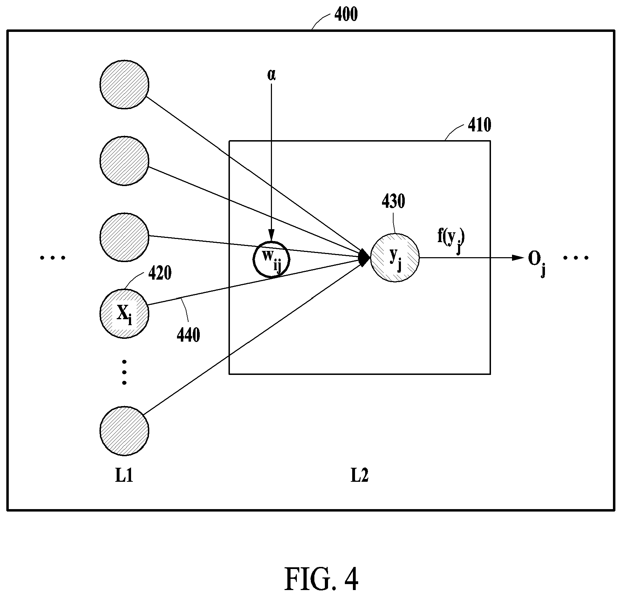

FIGS. 4 to 7 are diagrams illustrating a neural network model in which a value of another node operates through a non-linear operation, according to an embodiment.

The neural network model described with reference to FIGS. 4 to 7 may not include only one case described with reference to FIGS. 4 to 7 but may include at least one of the cases described with reference to FIGS. 4 to 7.

FIG. 4 illustrates a case in which the value of one of a plurality of nodes acts on an input of a connected node through a non-linear operation. FIG. 4 illustrates a neural network model 400. For ease of description, only a region 410 of the neural network model 400 in which the value of another node operates through a non-linear operation in the neural network model 400 is shown. For example, referring to the region 410, the nodes of the L1 layer connected to a node 430 of the L2 layer are shown. The node 430 may be connected to a node 420 via an edge 440 to which Wᵢⱼ is assigned. Although FIG. 4 illustrates one node 430 of the L2 layer, the disclosure is not limited thereto, and as such, according to another embodiment, two or more nodes may through a non-linear operation in the neural network model 400.

An electronic device may obtain data to be inferred. The electronic device may input the data to the neural network model 400 including a plurality of nodes. The electronic device may obtain an inference result output from the neural network model 400 based on the input data. The neural network model 400 may output the inference result based on a structure described below.

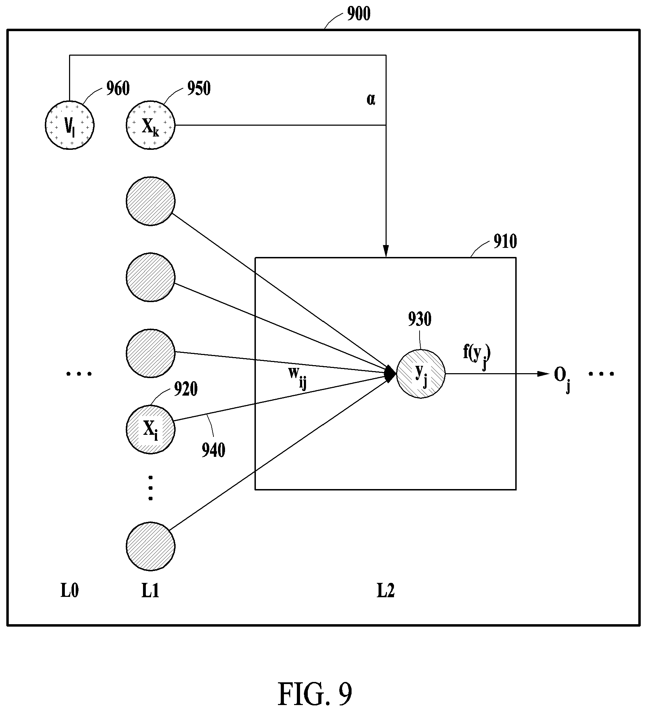

According to an embodiment, at least one of the nodes connected to the node 430 may be connected to a reference node included in the neural network model 400. For example, the node 420 may be connected to the reference node via the edge 440. However, the disclosure is not limited thereto, and as such, according to an embodiment, the at least one of the nodes connected to the node 430 may be connected to more than one reference node or a combination of reference nodes in the neural network model 400. According to an embodiment, the reference node may be any of the plurality of nodes as described below with reference to FIGS. 9 to 13.

The value (e.g., α) of the reference node may be applied to a weight corresponding to an edge connected to the reference node through a non-linear operation (e.g., g(α)). For example, α may be applied to the weight applied when the value of the node 420 is transmitted to the node 430. For example, α may be applied to Wᵢⱼ through the non-linear operation. The value of the reference node applied to a weight may be called a control input. A node providing a control input may be referred to as a control node or the reference node.

The value of the node 430 may be determined based on the node 420, the weight between the node 420 and the node 430, and the value of the reference node. The value of the node 430 may be determined based on the value of the node 420, the weight between the node 420 and the node 430, and the control input of the control node. An electronic device may obtain an inference result based on the value of the node 430.

According to an embodiment, the value (e.g., a control input) of the reference node may be applied to a weight through a multiplication operation. For example, α may be reflected in the value of the node 430 as *oⱼ = f*(Σ(*αwᵢⱼxᵢ*)). For example, when α is 0.1 and Wᵢⱼ is 0.9, Xᵢ may be multiplied by 0.09.

According to an embodiment, the value of the reference node may be applied to the weight through an addition operation. For example, α may be reflected in the value of the *oⱼ* = *f*(Σ((*wᵢⱼ+α*)*xᵢ*)). node 430 as .

However, the non-linear operation in which the value of the reference node is applied to the weight is only an example, and embodiments are not limited thereto. For example, it is apparent to those skilled in the art that various non-linear operations may be applied in addition to the multiplication and addition operations described above.

Hereinafter, a case is described in which the value of the reference node acts on an output (e.g., a MAC value) corresponding to a connected node through a non-linear operation.

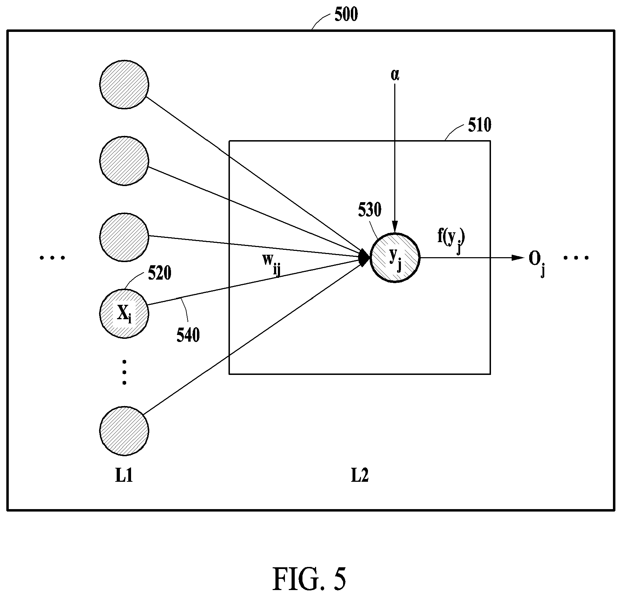

FIG. 5 illustrates a neural network model 500. For ease of description, only a region 510 in which the value of another node acts through a non-linear operation in the neural network model 500 is shown. For example, referring to the region 510, nodes of an L1 layer connected to a node 530 of an L2 layer are shown.

An electronic device may obtain data to be inferred. The electronic device may input the data to the neural network model 500 including a plurality of nodes. The electronic device may obtain an inference result output from the neural network model 500 as the data is input. The neural network model 500 may output the inference result based on a structure described below.

The node 530 may be connected to any of a plurality of nodes included in the neural network model 500. The reference node is described below with reference to FIGS. 9 to 13.

The value (e.g., α) of the reference node may adjust a parameter of a node. The value of the reference node may control the value of a node. The value of the reference node may be reflected in a MAC value corresponding to a node connected to the reference node through a non-linear operation (e.g., g(α)). For example, α may be applied through a non-linear operation to the MAC value (e.g., Y = W•X) corresponding to the node 530. For example, the value of the node 530 may be controlled based on the value of the reference node. The electronic device may obtain an inference result based on a controlled value of the node 530. The value of the reference node that controls the value of a node may be called a control input. A node providing a control input may be referred to as a control node or a reference node.

According to an embodiment, the value (e.g., control input) of the reference node may act on the MAC value corresponding to a connected node through a multiplication operation. The control input may act on the MAC value corresponding to a node connected to the control node through a multiplication operation. For example, α may act as a scale for the MAC value corresponding to the node 530.

According to an embodiment, the value of the reference node may act on the MAC value corresponding to the connected node through an addition operation. The control input may act on the MAC value corresponding to a node connected to the control node through an addition operation. For example, α may act as a bias for the MAC value corresponding to the node 530.

According to an embodiment, a predetermined node may be connected to two of the plurality of nodes included in the neural network model 500. The predetermined node may be connected to two reference nodes. The value of each of the two reference nodes may act on the MAC value of the predetermined node through an addition and/or multiplication operation. The predetermined node may be connected to two control nodes included in the neural network model 500. Each of the control inputs of the two control nodes may act on the MAC value of the predetermined node through an addition and/or multiplication operation. For example, the node 530 may be connected to the two reference nodes within the neural network model 500. Each of the values (e.g., α₁ and α₂) of the two reference nodes may act as a scale and/or a bias on the MAC value of the node 530. For example, α₁ and α₂ may be reflected in the value of the node 530 as *oⱼ* = *f*(*α*₁Σ(*wᵢⱼxᵢ*)+*α*₂)*.*

Hereinafter, a case in which the value of the reference node controls an activation function is described.

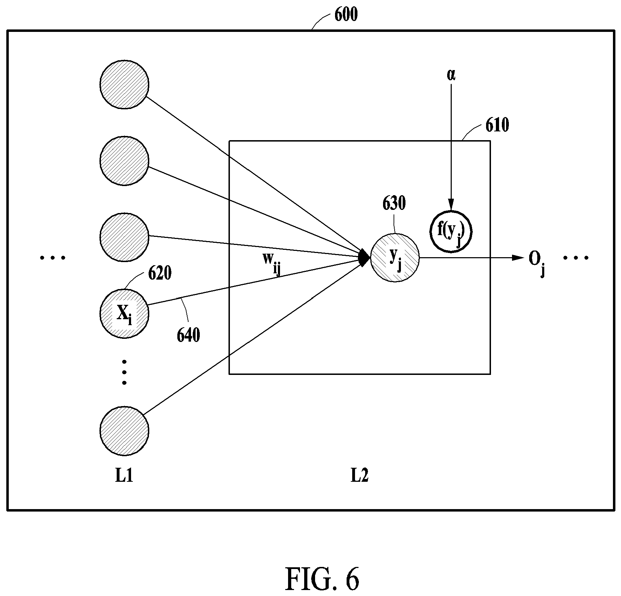

FIG. 6 illustrates a neural network model 600. For ease of description, only a region 610 in which the value of another node acts through a non-linear operation in the neural network model 600 is shown. For example, referring to the region 610, the nodes of an L1 layer connected to a node 630 of an L2 layer are shown.

An electronic device may obtain data to be inferred. The electronic device may input the data to the neural network model 600 including a plurality of nodes. The electronic device may obtain an inference result output from the neural network model 600 as the data is input. The neural network model 600 may output the inference result based on a structure described below.

The node 630 may be connected to a node of the next layer (e.g., L3 layer). An activation function may be applied between the node 630 and nodes connected to the node 630. The value (e.g., α) of the reference node may control the activation function through a non-linear operation (e.g., g(α)). The activation function may be denoted by f(yᵢ). For example, α may be used to control the activation function with *oⱼ* = *g*(*f*(Σ*wᵢⱼxᵢ*),*α*). The reference node is described below with reference to FIGS. 9 to 13. The value of the reference node that controls the activation function may be called a control input. A node providing a control input may be referred to as a control node or a reference node.

According to an embodiment, the value of the reference node may determine the type of activation function. A control input of the control node may determine the type of activation function. For example, the electronic device may determine a step function as an activation function when α is less than 1. For example, the electronic device may determine a sigmoid function as the activation function when α is greater than or equal to 1. The electronic device may obtain an inference result based on a function value of an activation function of which the type is determined.

According to an embodiment, the value of the reference node may control a characteristic of the activation function. A control input of the control node may control the characteristic of the activation function. The characteristic of the activation function may include a parameter such as the slope and threshold value of the activation function. The electronic device may obtain an inference result based on the function value of the activation function of which the characteristic is controlled.

Hereinafter, a case in which training is performed together with inference of the neural network model 600 is described.

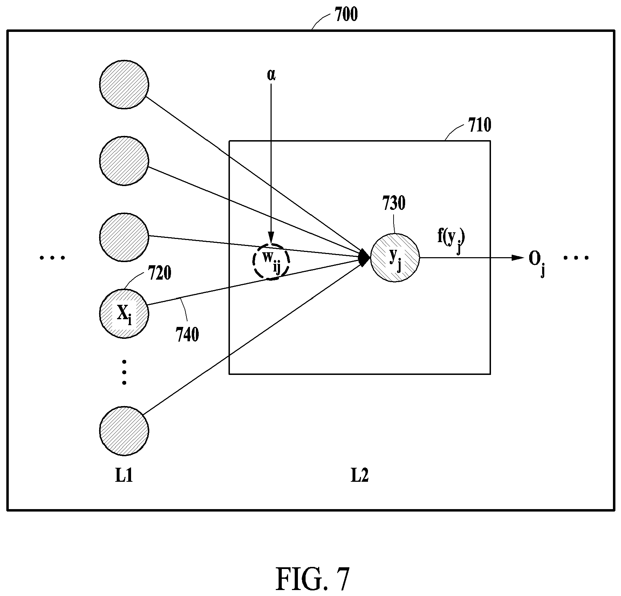

FIG. 7 illustrates a neural network model 700. For ease of description, only a region 710 in which the value of another node operates through a non-linear operation in the neural network model 700 is shown. For example, referring to the region 710, the nodes of an L1 layer connected to a node 730 of an L2 layer are shown.

An electronic device may obtain data to be inferred. The electronic device may input the data to the neural network model 700 including a plurality of nodes. The electronic device may obtain an inference result output from the neural network model 700 as the data is input. The neural network model 700 may output the inference result based on a structure described below.

A weight applied when the value of a node is transmitted may be updated based on the value (e.g., α) of the reference node included in the neural network model 700. For example, the weight Wᵢⱼ applied when the value of a node 720 is transmitted to the node 730 may be updated based on α. The reference node is described below with reference to FIGS. 9 to 13. The value of the reference node that updates a weight may be called a control input. A node providing a control input may be referred to as a control node or the reference node.

The reference node may be included in any of layers arranged after a layer including a node that receives a value. The control node may be included in any of the layers arranged after the layer including the node that receives the control input. The value of the reference node may be fed back to an edge connected to the reference node. The control input may be fed back to the edge connected to the control node.

For example, the reference node may be included in any of the layers arranged after a layer (e.g., L2 layer) of the node 730 that receives the value from the node 720. The value of the reference node may be fed back to the edge 740 to which the node 730 is connected.

The weight may be updated with the value of the reference node connected to an edge to which a weight is assigned. The weight may be updated based on the updated value of the reference node as the value of the reference node connected to the edge to which the weight is assigned is updated. In an example case in which the value of the reference node connected to the edge to which the weight is assigned is operated, the weight may be updated with the operated value. For example, the neural network model 700 may perform learning by updating the weight together with inference. During the inference process of the neural network model 700, the weight may be updated based on the value of the reference node, causing learning process to be performed simultaneously with the inference process. Even without a separate the learning process for the neural network model 700, it may perform learning through repeated inference processes.

For example, the edge 740 may be connected to the reference node of the L3 layer arranged after the L2 layer. Depending on the inference process of the neural network model 700, the value of the reference node of the L3 layer may be operated. In an example case in which the value of the reference node of the L3 layer is operated, the operated value may be transmitted to the edge 740. The weight assigned to the edge 740 may be updated to the operated value.

The electronic device may determine a node in which a prediction error occurs during the inference process. The electronic device may determine whether a prediction error occurs in any of the values of the nodes connected to a node via one or more edges. The electronic device may determine whether a prediction error occurs in any of the nodes transmitting a value. The electronic device may update the weight assigned to the edge connected to the node in response to the prediction error occurring. For example, the electronic device may determine whether a prediction error occurs in the value of the node 730. The electronic device may update the weight assigned to the edge 740 when the prediction error occurs in the value of the node 730.

The electronic device may determine, based on predictive coding, whether the prediction error occurs in the value of the node. The electronic device may predict, based on the predictive coding, the value of the node and determine whether the prediction error occurs by comparing a predicted value to the value of an actual node.

According to the descriptions provided in FIGS. 4 to 7, if the value of another node (e.g., the reference node) is applied as a nonlinear operation, a number of layers in the neural network model may be reduced. When the value of another node (e.g., the reference node) is applied as the nonlinear operation, more complex computations may be performed compared to conventional neural networks that perform inference through simple feedforward operations, thereby reducing the number of layers. Due to the reduced number of layers, the size of the neural network may be smaller than that of the conventional neural networks. The neural network in which the value of another node (e.g., the reference node) is applied as the nonlinear operation may achieve a same inference performance as the conventional neural network, even with fewer layers.

Hereinafter, a method of finding a node in which a prediction error occurs among a plurality of nodes is described.

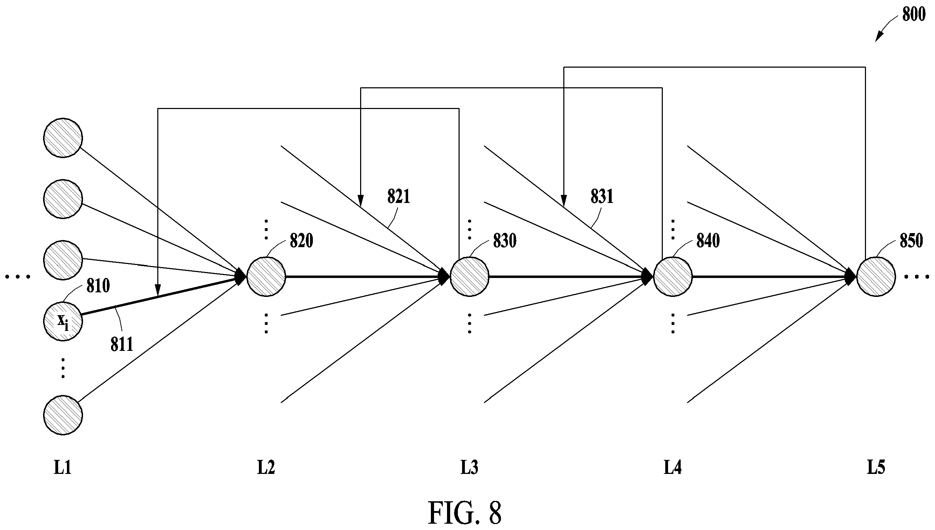

FIG. 8 is a diagram illustrating a method of finding a node in which a prediction error occurs, according to an embodiment.

FIG. 8 illustrates a neural network model 800 according to an embodiment. A prediction error that occurs in a node 810 may be fed forward. In FIG. 8, for ease of description, edges to which a prediction error is transmitted are marked with bolded lines. For example, a weight assigned to an edge 811 may be the weight that causes a prediction error. For example, a prediction error caused by the edge 811 may be fed forward to a node 820, a node 830, a node 840, and a node 850. Referring to FIG. 8, the node 830 may be a reference node for the edge 811, the node 840 may be a reference node for an edge 821 and the node 850 may be a reference node for an edge 831.

An electronic device may determine, based on predictive coding, whether a prediction error occurs for a plurality of nodes included in the neural network model 800. For example, the electronic device may determine that the node 850 has a prediction error.

The electronic device may find a weight that causes a prediction error based on a feedback from the node 850 in which the prediction error occurs. For example, the electronic device may determine whether an error occurs in a weight assigned to the edge 811 based on a feedback from the node 850. In an example case in which there is no error in the weight assigned to the edge 831, the electronic device may determine whether an error occurs in the weight assigned to the edge 821 based on a feedback from the node 840. In an example case in which there is no error in the weight assigned to the edge 821, the electronic device may determine whether an error occurs in the weight assigned to the edge 811 based on a feedback from the node 830.

The electronic device may update a weight in which a prediction error occurs. The electronic device may update the weight to the value of the reference node connected to an edge to which the weight in which a prediction error occurs is assigned. For example, the electronic device may update the weight assigned to the edge 811 to the value of the node 830 connected to the edge 811.

Hereinafter, the reference node is described.

FIGS. 9 to 13 are diagrams illustrating a location of another node acting as an input, according to an embodiment.

FIG. 9 illustrates a neural network model 900. For ease of description, only a region 910 in which the value of another node operates through a non-linear operation in the neural network model 900 is shown. For example, referring to the region 910, the nodes of an L1 layer connected to a node 930 of an L2 layer are shown. For ease of description, the configuration in which reference nodes (e.g., a node 950 and a node 960) are connected to an edge and/or the node 930 in the region 910 is omitted. For example, it is apparent to those skilled in the art that the reference nodes (e.g., the node 950 and the node 960) may be connected to the edge and/or the node 930 in the region 910, according to the structure described above with reference to FIGS. 4 to 7.

The node 930 and/or an edge 940 may be connected to a reference node included in the neural network model 900. The reference node may be included in any of layers arranged before a layer including the node 930. A connection relationship illustrated in FIG. 9 may be referred to as a feed-forward connection.

For example, the node 930 and/or the edge 940 may be included in any of the layers arranged before the layer (e.g., L2 layer) including the node 930. For example, the node 930 and/or the edge 940 may be connected to the node 950 of a layer (e.g., L1 layer) including the node 920. The value of the node 920 may be reflected in the value of the node 930 through a non-linear operation. For example, the node 930 and/or the edge 940 may be connected to the node 960 included in an L0 layer arranged before the L2 layer. The value of the node 960 may be reflected in the value of the node 930 through a non-linear operation. The node 960 and the node 950 may be a control node or a reference node. The values of the node 960 and the node 950 may be control inputs.

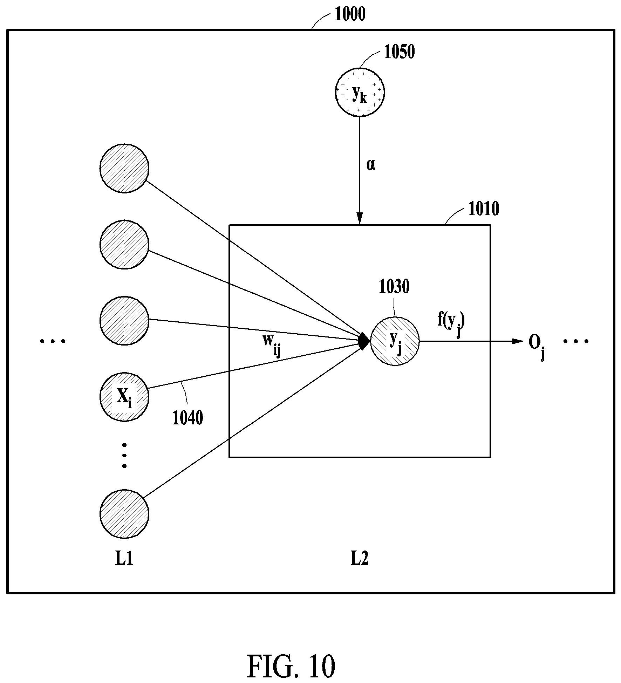

FIG. 10 illustrates a neural network model 1000. For ease of description, only a region 1010 in which the value of another node operates through a non-linear operation in the neural network model 1000 is shown. For example, referring to the region 1010, the nodes of an L1 layer connected to a node 1030 of an L2 layer are shown. For ease of description, the configuration in which a reference node (e.g., a node 1050) is connected to an edge and/or the node 1030 in the region 1010 is omitted. For example, it is apparent to those skilled in the art that the reference node (e.g., the node 1050) may be connected to the edge and/or the node 1030 in the region 1010.

The node 1030 and/or an edge 1040 may be connected to a reference included in the neural network model 1000. The reference node may be included in a layer including the node 1030. The connection in FIG. 10 may be called a lateral connection.

For example, the node 1030 and/or the edge 1040 may be connected to the node 1050 included in the L2 layer, which is the same layer as the node 1030. The value of the node 1050 may be reflected in the value of the node 1030 through a non-linear operation. The node 1050 may be a control node or a reference node. The value of node 1050 may be a control input.

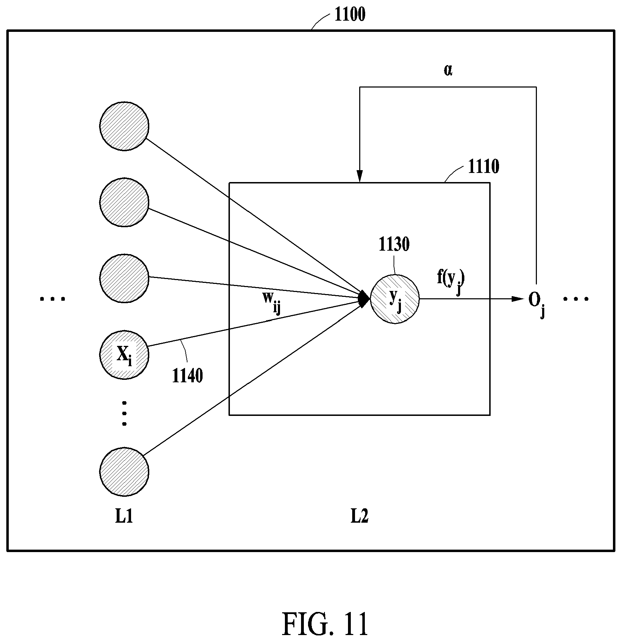

FIG. 11 illustrates a neural network model 1100. For ease of description, only a region 1110 in which the value of another node operates through a non-linear operation in the neural network model 1100 is shown. For example, referring to the region 1110, the nodes of an L1 layer connected to a node 1130 of an L2 layer are shown. For ease of description, the configuration in which the value of the node 1130 is connected to an edge and/or the node 1130 in the region 1110 is omitted. For example, it is apparent to those skilled in the art that the node 1130 may be connected to the edge and/or the node 1030 in the region 1110.

The node 1130 may be connected to itself. For example, the node 1130 may be connected to the node 1130. The value of the node 1130 may be reflected in the value of the node 1130 through a non-linear operation. The node 1130 may be connected to any of the edges connected to the node 1130. For example, the node 1130 may be connected to the edge 1040. The value of the node 1130 may be reflected in the value of the node 1130 through a non-linear operation.

The connection relationship described above with reference to FIG. 11 may be referred to as an autoregressive connection.

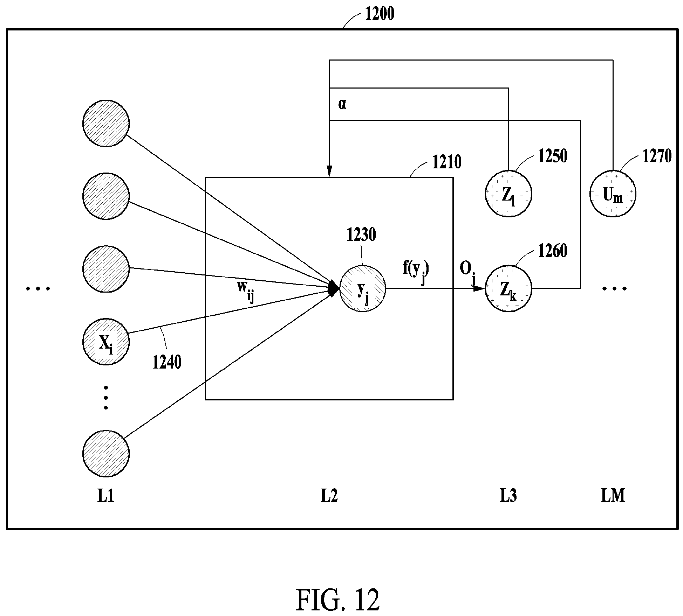

FIG. 12 illustrates a neural network model 1200. For ease of description, only a region 1210 in which the value of another node operates through a non-linear operation in the neural network model 1200 is shown. For example, referring to the region 1210, the nodes of an L1 layer connected to a node 1230 of an L2 layer are shown. For ease of description, the configuration in which reference nodes (e.g., a node 1250, a node 1260, and a node 1270) are connected to an edge and/or the node 1230 in the region 1210 is omitted. For example, it is apparent to those skilled in the art that the reference nodes (e.g., the node 1250, the node 1260, and the node 1270) may be connected to the edge and/or the node 1230 of the region 1210, according to the structure described above with reference to FIGS. 4 to 7.

The node 1230 and/or an edge 1240 may be connected to a reference included in the neural network model 1200. The reference node may be included in any of layers arranged after a layer including the node 1230. A connection relationship illustrated in FIG. 12 may be referred to as a feed-back connection.

For example, the node 1230 and/or the edge 1240 may be included in any of the layers arranged after the layer (e.g., L2 layer) including the node 1230. For example, the node 1230 and/or the edge 1240 may be connected to a node of a layer (e.g., L3 layer) including the node 1260 connected to the node 1230. For example, the node 1230 and/or the edge 1240 may be connected to the node 1260 connected to the node 1230. For example, the node 1230 and/or the edge 1240 may be connected to the node 1250. The values of the node 1260 and the node 1250 may be reflected in the value of the node 1230 through a non-linear operation. For example, the node 1230 and/or the edge 1240 may be connected to the node 1270 included in an LM layer arranged after the L3 layer. The value of the node 1270 may be reflected in the value of the node 1230 through a non-linear operation. The node 1250, the node 1260, and the node 1270 may be control nodes or reference nodes. The values of the node 1250, the node 1260, and the node 1270 may be control inputs.

Hereinafter, a case in which a plurality of connections for individual nodes is described.

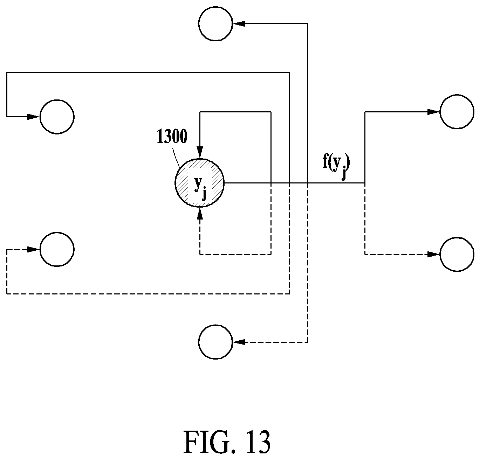

FIG. 13 illustrates a node 1300. The node 1300 may be a control node or a reference node. The node 1300 may be used for inference of a neural network model and used as a control node for a connected node and/or edge based on the connection relationship described above. The node 1300 may be connected to a node and/or an edge within the neural network model, based on the connection relationship described above with reference to FIGS. 9 to 12. The node 1300 may be connected to the node and/or the edge within the neural network model by at least one of a feed-forward connection, a lateral connection, a feedback connection, and an autoregressive connection. For example, the node 1300 may be connected to the node and/or the edge within the neural network model through the feed-forward connection, the lateral connection, the feedback connection, and the autoregressive connection.

The node 1300 may transmit a value to the node and/or the edge within the neural network model, based on at least one connection relationship of the feed-forward connection, the lateral connection, the feedback connection, and the autoregressive connection. The value of the node 1300 may act on the node and/or the edge within the neural network model through a non-linear operation, based on at least one connection relationship of the feed-forward connection, the lateral connection, the feedback connection, and the autoregressive connection.

Similarly, the node and/or the edge within the neural network model may be connected to one or more nodes, based on at least one connection relationship of the feed-forward connection, the lateral connection, the feedback connection, and the autoregressive connection.

According to an embodiment, the neural network model may include a layer including only nodes that transmit a value to a node and/or an edge within a neural network, based on at least one connection relationship of the feed-forward connection, the lateral connection, the feedback connection, and the autoregressive connection. The layer may correspond to the thalamus in a biological neural network.

Based on the connection relationship described above, the neural network model may be similar to a biological neural network. The neural network model based on the connection relationship described above may include fewer layers and nodes than the conventional neural network model.

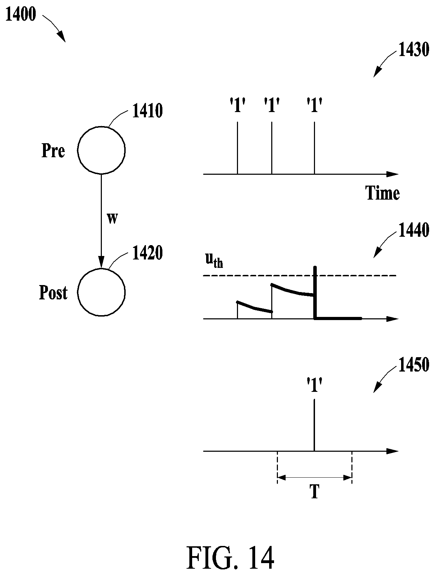

FIG. 14 is a diagram illustrating a spike neural network according to an embodiment.

FIG. 14 illustrates a spike neural network model 1400. In a biological neural network, a neuron may be activated when the neuron receives a stimulus greater than or equal to a reference level. The reference level may be a predetermined level. Similarly, in the spike neural network model 1400, a node may be activated based on an action potential being greater than or equal to a threshold value. For example, in the spike neural network model 1400, a node may be activated when an action potential is greater than or equal to a threshold value.

For example, a graph 1430 may represent a spike occurring over time at a node 1410. Referring to the graph 1430, three spikes may occur over time from the node 1410 to a node 1420. As more spikes occur, the strength (e.g., a weight) of the connection between nodes may increase, and as fewer spikes occur, the strength of the connection between the nodes may decrease.

In the spike neural network 1400, the strength of the connection between the nodes may be controlled by a spike-timing-dependent plasticity (STDP) scheme based on a spike timing between the nodes. In the STDP scheme, a connection strength may be controlled based on an STDP curve that represents the change in connection strength according to a spike occurrence time difference between a presynaptic neuron (e.g., the node 1410) and a postsynaptic neuron (e.g., the node 1420)

According to an embodiment, a graph 1440 may be represent an active potential of the node 1420. Referring to the graph 1440, the active potential may increase based a spike at the node 1420. For example, the active potential may increase when a spike occurs at the node 1420. Even in an example case in which the active potential increases, the node 1420 may not be activated. The node 1420 may be activated when the action potential is greater than or equal to a threshold value (uₜₕ).

According to an embodiment, graph 1450 may represent the occurrence of spikes over time at the node 1420. Referring to FIG. 14, in an example case in which three spikes occur at the node 1410, the active potential of the node 1420 is greater than or equal to the threshold value, so the node 1420 may be activated as depicted in graph 1450. The node 1420, which is activated, may generate a spike. In an example case in which the node 1420 is activated, the active potential of the node 1420 may be 0.

According to an embodiment, the neural network model described above with reference to FIGS. 1 to 13 may include the spike neural network model 1400. It is apparent to those skilled in the art that the description provided above with reference to FIGS. 1 to 13 may apply to the spike neural network model 1400.

In an example case in which there is a control input, the strength of the connection between nodes may be controlled based on the control input. The shape of the STDP curve may change based on the control input. Based on the control input, a hyperparameter that determines the shape of the STDP curve may be controlled.

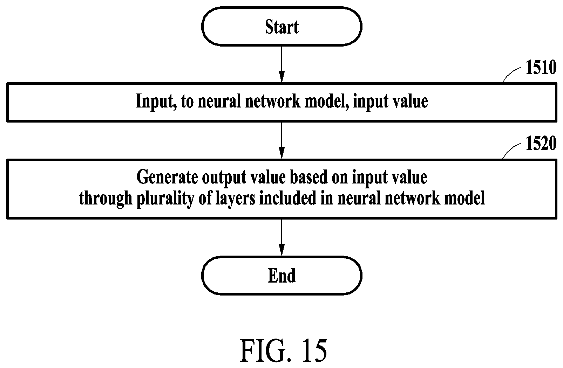

FIG. 15 is a flowchart illustrating an operation method of an electronic device, according to an embodiment.

In the following embodiments, operations may be performed sequentially but not necessarily. For example, the order of the operations may be changed, and at least two of the operations may be performed in parallel. The operations of FIG. 15 may be performed by at least one component of the electronic device. For example, the electronic device may include a memory that stores instructions. In an example case in which the instructions are executed individually and/or collectively by the processor, the electronic device may perform the following operations.

According to an embodiment, in operation 1510, the method may include obtaining data to be inferred. For example, the electronic device may obtain data to be inferred.

According to an embodiment, in operation 1520, the method may include obtaining an inference result of data output from a neural network model as the data is input to the neural network model including a plurality of nodes. For example, the electronic device may obtain an inference result of data output from a neural network model as the data is input to the neural network model including a plurality of nodes.

According to an embodiment, as described above with reference to FIGS. 7 and 8, in an inference process, a first weight applied when the value of a first node (e.g., 720) is transmitted to a second node (e.g., 730) among the plurality of nodes may be updated based on the value (e.g., α) of a first reference node, which may include any the plurality of nodes.

According to an embodiment, as described above with reference to FIG. 4, in the inference process, the value of a fourth node (e.g.,. 430) may be determined based on a third node (e.g., 420) among the plurality of nodes, a second weight between the third node (e.g., 420) and the fourth node (e.g., 440) connected to the third node, and a second reference node, which may be any of the plurality of nodes.

As described above with reference to FIG. 6, in the inference process, the type of an activation function applied to a fifth node, which is any of the plurality of nodes, may be determined based on the value of a third reference node, which is any of the plurality of nodes.

According to an embodiment, as described above with reference to FIG. 6, in the inference process, the characteristic of the activation function applied to the fifth node (e.g., 630), which is any of the plurality of nodes, may be controlled according to the value of the third reference node.

According to an embodiment, as described above with reference to FIG. 5, in the inference process, the value of a sixth node (e.g., 530), which is any of the plurality of nodes, may be determined based on a scale and/or a bias determined according to the value of a fourth reference node, which is any of the plurality of nodes.

Operation 1510 and operation 1520 are as described in detail with reference to FIGS. 1 to 14, and thus detailed descriptions thereof are omitted.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a DSP, a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is singular; however, one of ordinary skill in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or one or more combinations thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, and/or replaced or supplemented by other components or their equivalents.

The invention is specified in the following claims.

## Claims

1. An operation method of an electronic device, the operation method comprising:
inputting, into a neural network model, data to be inferred, the neural network model comprising a plurality of nodes; and
performing an inference process by:
updating a first weight corresponding to transmission of a value of a first node, among the plurality of nodes, to a second node, based on a value of a first reference node, among the plurality of nodes; and
obtaining an inference result from the neural network model based on the data to be inferred and the updated first weight.

2. The operation method of claim 1, wherein the first reference node is included in one of one or more layers arranged after a layer including the second node among a plurality of layers included in the neural network model, and
wherein the first weight is preferably updated based on an updated value of the first reference node as the value of the first reference node connected to an edge connecting the first node to the second node is updated.

3. The operation method of claim 1 or 2, wherein the first weight is updated based on a prediction error occurring in one of values of nodes, among the plurality of nodes, connected to the second node via one or more edges.

4. The operation method of one of claims 1 to 3, wherein the neural network model comprises a spike neural network model.

5. The operation method of one of claims 1 to 4, wherein, in the inference process, a third node is determined based on a fourth node among the plurality of nodes, a second weight between the fourth node and the third node connected to the fourth node, and a value of a second reference node among the plurality of nodes.

6. The operation method of one of claims 1 to 5, wherein, in the inference process, a type of an activation function applied to a third node, among the plurality of nodes, is determined based on a value of a second reference node, among the plurality of nodes.

7. The operation method of one of claims 1 to 6, wherein, in the inference process, a characteristic of an activation function applied to a third node, among the plurality of nodes, is controlled according to a value of a second reference node.

8. The operation method of one of claims 1 to 7, wherein, in the inference process, a value of a third node, among the plurality of nodes, is determined based on a scale or a bias determined according to a value of a second reference node among the plurality of nodes.

9. A non-transitory computer-readable storage medium storing instructions that, when executed by at least one processor of an electronic device, cause the at least one processor to perform the method comprising the steps of:
inputting, into a neural network model, data to be inferred, the neural network model comprising a plurality of nodes; and
performing an inference process by:
obtaining a value of a first node based on a second node among the plurality of nodes, a weight between the second node and first node connected to the second node, and a value of a reference node, among the plurality of nodes; and
obtaining an inference result from the neural network model based on the data to be inferred and the value of the first node.

10. The computer-readable storage medium of claim 9, wherein the reference node is connected to an edge connecting the first node to the second node and configured to transmit a value of the reference node to the edge, or
wherein the reference node comprises a node included in a same first layer as the first node, a node included in one or more layers arranged before the first layer, a node included in a second layer including the second node, a node included in one or more layers arranged after the second layer, or the second node, or
wherein a value of the reference node is used for a non-linear operation with the weight.

11. An electronic device comprising:
a memory configured to store instructions; and
at least one processor configured to execute the instructions,
wherein the instructions, when executed individually or collectively by the at least one processor, cause the electronic device to:
input, into a neural network model, data to be inferred, the neural network model comprising a plurality of nodes; and
perform an inference process by:
updating a first weight corresponding to transmission of a value of a first node among the plurality of nodes to a second node, based on a value of a first reference node, among the plurality of nodes; and
obtaining an inference result from the neural network model based on the data to be inferred and the updated first weight.

12. The electronic device of claim 11, wherein the first reference node is included in one of one or more layers arranged after a layer including the second node among a plurality of layers included in the neural network model, and
wherein the first weight is preferably updated based on an updated value of the first reference node as the value of the first reference node connected to an edge connecting the first node to the second node is updated.

13. The electronic device of claim 11 or 12, wherein the first weight is updated based on a prediction error occurring in one of values of nodes, among the plurality of nodes, connected to the second node via one or more edges.

14. The electronic device of one of claims 11 to 13, wherein the neural network model comprises a spike neural network model.

15. The electronic device of one of claims 11 to 14, wherein, in the inference process, a third node is determined based on a fourth node among the plurality of nodes, a second weight between the fourth node and the third node connected to the fourth node, and a value of a second reference node among the plurality of nodes, or
wherein, in the inference process, a type of an activation function applied to a third node, among the plurality of nodes, is determined based on a value of a second reference node, among the plurality of nodes.
